Europäisches Patentamt

European Patent Office

Office européen des brevets

(11) Veröffentlichungsnummer: **0 319 670 B1**

# EUROPÄISCHE PATENTSCHRIFT

(45) Veröffentlichungstag der Patentschrift: **15.04.92**

(21) Anmeldenummer: **88116844.7**

(22) Anmeldetag: **11.10.88**

(51) Int. Cl.⁵: **B60T 8/36**, B60T 8/34, B60T 15/20

(54) **Relaisventileinrichtung.**

(30) Priorität: **10.12.87 DE 3741790**

(43) Veröffentlichungstag der Anmeldung:
**14.06.89 Patentblatt 89/24**

(45) Bekanntmachung des Hinweises auf die
Patenterteilung:
**15.04.92 Patentblatt 92/16**

(84) Benannte Vertragsstaaten:
**DE ES FR GB IT SE**

(56) Entgegenhaltungen:
**DE-A- 1 808 355**
**DE-A- 2 365 803**
**DE-B- 2 342 542**
**FR-A- 2 176 493**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Deike, Karl-Heinz, Ing. (grad.)
Feldstrasse 17
W-3017 Pattensen 5(DE)**
Erfinder: **Kiel, Bernd, Ing. (grad.)
Barnestrasse 40
W-3050 Wunstorf 1(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

EP 0 319 670 B1

## Beschreibung

Die Erfindung betrifft eine Relaisventileinrichtung, insbesondere für eine Antiblockierregeleinrichtung für Fahrzeugbremsanlagen, gemäß dem Oberbegriff des Patentanspruchs 1.

Eine derartige Relaisventileinrichtung ist aus der FR-A-2 176 493 bekannt.

Die bekannte Relaisventileinrichtung weist ein erstes Doppelsitzventil, ein zweites Doppelsitzventil sowie einen ersten und einen zweiten Relaiskolben auf, die zur Betätigung der Doppelsitzventile dienen.

Die Doppelsitzventile und die Relaiskolben sind in Richtung ihrer Längsachse hintereinander angeordnet, derart, daß die beiden Doppelsitzventile zwischen den Relaiskolben gelegen sind.

Die Druckmitteleingangskammer für das eine Doppelsitzventil und die Druckmitteleingangskammer für das andere Doppelsitzventil sind über einen gemeinsamen Druckmittelanschluß mit einer Druckmittelquelle und die Auslaßkammer des einen Doppelsitzventils und die Auslaßkammer des zweiten Doppelsitzventils stehen über einen Druckmittelauslaß mit der Atmosphäre in Verbindung.

Diese bekannte Relaisventileinrichtung hat den Nachteil, daß es beim Entlüftungsvorgang an einem der beiden Relaisventile oder auch an beiden Relaisventilen zu einer Beeinflussung des dem jeweils anderen Ventil zugeordneten Relaiskolbens kommen kann (z. B. durch Bildung von Staudruck).

Der Erfindung liegt deshalb die Aufgabe zugrunde, eine Relaisventileinrichtung der eingangs erwähnten Art zu schaffen, die einen einfachen Aufbau aufweist und bei welcher eine ungewollte gegenseitige Beeinflussung der Relaiskolben sicher verhindert wird.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, durch die Anordnung eines Umlenkteiles für die ausströmende Druckluft eine Beeinträchtigung der ordnungsgemäßen Funktion der beiden Relaiskolben zu verhindern und die Entlüftungsfunktion der beiden Relaisventile unbeeinflußt voneinander erfolgen zu lassen.

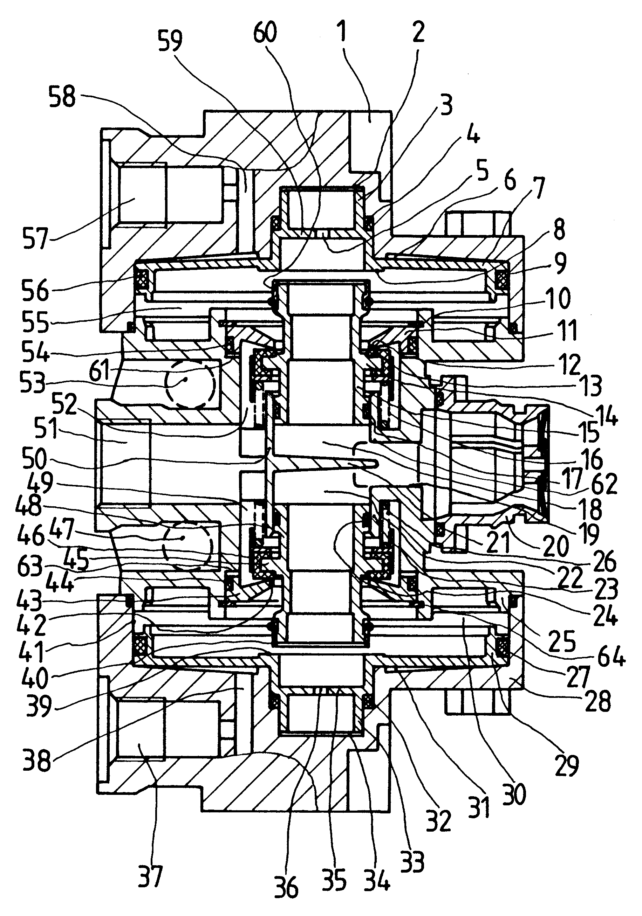

Anhand der Zeichnung wird nachstehend ein Ausführungsbeispiel der Erfindung näher erläutert.

Die Abbildung zeigt eine als Doppelrelaisventil ausgebildete Relaisventileinrichtung, wobei die Ventile und Relaiskolben, in Richtung der Längsachse der Ventile gesehen, hintereinanderliegend angeordnet sind.

Das Doppelrelaisventil weist ein an seinen einander abgewandten Seiten offenes Gehäuse (25) und zwei Gehäusedeckel (1) und (28) auf, wobei je ein Gehäusedeckel (1) bzw. (28) je eine der beiden offenen Seiten des Gehäuses (25) verschließt.

Im ersten Gehäusedeckel (1) ist eine abgestufte Gehäuseausnehmung (56) vorgesehen, in welcher ein erster Relaiskolben (7) mittels eines Dichtringes (9) abgedichtet verschiebbar angeordnet ist. Der erste Relaiskolben (7) trennt eine erste Steuerkammer (6) druckdicht von einer ersten Arbeitskammer (55).

Auf seiner der ersten Arbeitskammer (55) abgewandten Seite weist der erste Relaiskolben (7) einen ringförmigen Fortsatz (3) auf, der sich in den den kleineren Durchmesser aufweisenden Teil der Gehäuseausnehmung (56) hineinerstreckt und in dieser geführt wird. Ein Dichtring (4), der den Fortsatz (3) umgibt, liegt dichtend an der die Ausnehmung für den Fortsatz (3) begrenzenden Wand an und verhindert so eine Verbindung zwischen der ersten Steuerkammer (6) und einem Raum (2), der von einer im Fortsatz (3) vorgesehenen Wand (59) begrenzt wird. Die Wand (59) weist eine nach Art einer Drossel wirkende Durchlaßöffnung (5) auf, über welche die erste Arbeitskammer (55) und der Raum (2) miteinander verbunden sind.

Über einen im ersten Gehäusedeckel (1) vorgesehenen ersten Steueranschluß (57) und einen an diesen anschließenden Kanal (58) ist die erste Steuerkammer (6) mit einer Steuerdruckmittelquelle verbindbar.

Der erste Gehäusedeckel (1) ist mit der einen Seite des Gehäuses (25) verbunden.

Das Gehäuse (25) begrenzt mit seiner dem ersten Relaiskolben (7) zugewandten Seite die erste Arbeitskammer (55), die über einen ersten Druckmittelausgang (53) mit einem nicht dargestellten Verbraucher, wie z.B. einem Bremszylinder, verbunden ist. Im Gehäuse (25) ist eine abgestufte Gehäuseausnehmung vorgesehen, die in ihrem dem ersten Gehäusedeckel (1) zugewandten Teil einen ersten Gehäuseeinsatz (11) aufweist, der vom deckelseitigen Teil der Gehäuseausnehmung her in diese eingesetzt auf einer Abstufung (61) aufliegt und mittels eines Dichtringes (54) abgedichtet in diesem Teil der Gehäuseausnehmung, z.B. mittels eines Sicherungsringes (10), befestigt ist. Der erste Gehäuseeinsatz (11) ist im wesentlichen als ein ringförmiger Körper ausgebildet, der auf seiner der ersten Arbeitskammer (55) abgewandten Seite als Ventilsitz (12) ausgebildet ist.

Durch den ersten Gehäuseeinsatz (11) ragt ein stößelartiger rohrförmiger Körper (15), der in Richtung der Längsachse des ersten Gehäuseeinsatzes (11) verschiebbar angeordnet ist.

Im Gehäuse (25) ist eine in Richtung der Längsachse des Gehäuses (25) verlaufende, vorzugsweise als Rohr ausgebildete Wand (50) angeordnet, die vorzugsweise einstückig mit dem Gehäuse (25) ausgebildet ist.

Der rohrförmige Körper (15) wird mittels eines auf seinem Umfang angeordneten Dichtringes (17) abgedichtet in dem Rohr (50) in Richtung der Längsachse des Rohres (50) verschiebbar geführt. Auf dem Umfang des rohrförmigen Körpers (15) ist ein sich radial nach außen erstreckender umlaufender Vorsprung (14) vorgesehen, der als Träger für einen Dichtkörper (13) dient. Der rohrförmige Körper (15) wird mittels einer im Gehäuse (25) abgestützten Feder (16) in Richtung auf den Ventilsitz (12) zu belastet, so daß der Dichtkörper (13) am Ventilsitz (12) anliegt. Der Ventilsitz (12) und der Dichtkörper (13) bilden ein Einlaßventil (12, 13).

An dem in die erste Arbeitskammer (55) hineinragenden Ende des rohrförmigen Körpers (15) ist ein weiterer Dichtkörper (60) vorgesehen, der mit einem am ersten Relaiskolben (7) angeordneten Ventilsitz (8) ein Auslaßventil (60, 8) bildet. Das so gebildete kombinierte Einlaß- und Auslaßventil (12, 13, 60, 8) stellt ein erstes Doppelsitzventil (12, 13, 60, 8) der Relaisventileinrichtung dar, über welches die erste Arbeitskammer (55) einerseits mit einer Teilkammer (52) einer Druckmitteleingangskammer und andererseits mit einer Teilkammer (18) einer von der Innenwand des Rohres (50) begrenzten Auslaßkammer verbindbar ist.

Die aus der Teilkammer (52) und einer weiteren Teilkammer (49), auf die noch eingegangen wird, bestehende Druckmitteleingangskammer (52, 49) ist über einen am Gehäuse (25) angeordneten, als Druckmitteleingang (51) dienenden Druckmittelanschluß mit einer Druckmittelquelle verbunden. Die aus der Teilkammer (18) und einer weiteren Teilkammer (22) bestehende, von der Innenwand des Rohres (50) begrenzte Auslaßkammer (18, 22) ist über einen in der Wand des Rohres (50) vorgesehenen Durchlaß (62), sowie einen daran anschließenden, in der Wand des Gehäuses (25) vorgesehenen Druckmittelauslaß (19) und einen an diesen anschließenden Anschlußstutzen (20), an den ein nicht dargestellter Geräuschdämpfer montierbar ist, mit der Atmosphäre verbunden.

Ein zweiter Gehäuseeinsatz (43) ist genauso wie der erste Gehäuseeinsatz (11) als ein ringförmiger Körper ausgebildet, der mittels eines auf seinem Umfang vorgesehenen Dichtringes (44) abgedichtet in der abgestuften Gehäuseausnehmung des Gehäuses (25) auf einer Abstufung (63) aufliegt und mittels eines Sicherungsringes (64) im Gehäuse (25) befestigt ist. Die Montage des zweiten Gehäuseeinsatzes (43) erfolgt von der dem Innenraum des Gehäuses (25) abgewandten Seite der abgestuften Gehäuseausnehmung, die auf der dem ersten Deckel (1) abgewandten Seite des Gehäuses (25) gelegen ist, her.
Der zweite Gehäuseeinsatz (43) ist spiegelbildlich zum ersten Gehäuseeinsatz (11) im Gehäuse (25) angeordnet.

Auf der dem ersten Deckel (1) abgewandten Seite des Gehäuses (25) ist ein zweiter Gehäusedeckel (28) befestigt, welcher ebenfalls spiegelbildlich zum ersten Gehäusedeckel (1) am Gehäuse (25) angeordnet ist.

Im zweiten Gehäusedeckel (28) ist eine abgestufte Gehäuseausnehmung (41) vorgesehen, in welcher ein zweiter Relaiskolben (29) mittels eines Dichtringes (27) abgedichtet verschiebbar angeordnet ist. Der zweite Relaiskolben (29) trennt eine zweite Steuerkammer (31) druckdicht von einer zweiten Arbeitskammer (30). Auf seiner der zweiten Arbeitskammer (30) abgewandten Seite weist der zweite Relaiskolben (29) einen ringförmigen Fortsatz (33) auf, der sich in den den kleineren Durchmesser aufweisenden Teil der Gehäuseausnehmung (41) hineinerstreckt und in dieser geführt wird. Ein Dichtring (32), der den Fortsatz (33) umgibt, liegt dichtend an der die Ausnehmung für den Fortsatz (33) begrenzenden Wand an und verhindert so eine Verbindung zwischen der zweiten Steuerkammer (31) und einem Raum (34), der von einer im Fortsatz (33) vorgesehenen Wand (35) begrenzt wird. Die Wand (35) weist eine nach Art einer Drossel wirkende Durchlaßöffnung (36) auf, über welche die zweite Arbeitskammer (30) und der Raum (34) miteinander verbunden sind.

Über einen am zweiten Gehäusedeckel (28) vorgesehenen zweiten Steueranschluß (37) und einen an diesen anschließenden Kanal (38) ist die zweite Steuerkammer (31) mit einer Steuerdruckmittelquelle verbindbar.

Die zweite Arbeitskammer (30) ist über einen im Gehäuse (25) angeordneten zweiten Druckmittelausgang (47) mit einem nicht dargestellten Verbraucher, wie z.B. einem Bremszylinder, verbunden.

Der zweite Gehäuseeinsatz (43) ist im wesentlichen als ein ringförmiger Körper ausgebildet, der auf seiner der zweiten Arbeitskammer (30) abgewandten Seite als Ventilsitz (42) ausgebildet ist. Durch den zweiten Gehäuseeinsatz (43) ragt ein stößelartiger rohrförmiger Körper (48), der in Richtung der Längsachse des zweiten Gehäuseeinsatzes (43) verschiebbar angeordnet ist. Der zweite rohrförmige Körper (48) ist dem ersten rohrförmigen Körper (15) gegenüberliegend mittels eines auf seinem Umfang angeordneten Dichtringes (24) im Rohr (50) abgedichtet in Richtung der Längsachse des Rohres (50) verschiebbar geführt.

Auf dem Umfang des zweiten rohrförmigen Körpers (48) ist ein sich radial nach außen erstreckender umlaufender Vorsprung (45) vorgesehen, der als Träger für einen Dichtkörper (46) dient. Der zweite rohrförmige Körper (48) wird mittels einer im Gehäuse (25) abgestützten Feder (26) in Richtung auf den Ventilsitz (42) zu belastet, so daß der Dichtkörper (46) am Ventilsitz (42) anliegt. Der Ventilsitz (42) und der Dichtkörper (46) bilden ein Einlaßventil (42, 46).

An dem in die zweite Arbeitskammer (30) hineinragenden Ende des rohrförmigen Körpers (48) ist ein weiterer Dichtkörper (40) vorgesehen, der mit einem am zweiten Relaiskolben (29) angeordneten Ventilsitz (39) ein Auslaßventil (39, 40) bildet. Das so gebildete kombinierte Einlaß- und Auslaßventil (42, 46, 39, 40) stellt ein zweites Doppelsitzventil (42, 46, 39, 40) der Relaisventileinrichtung dar, über welches die zweite Arbeitskammer (30) einerseits mit der Teilkammer (49) der Druckmitteleingangskammer (52, 49) und andererseits mit der Teilkammer (22) der von der Innenwand des Rohres (50) begrenzten Auslaßkammer (18, 22) verbindbar ist.

Die Auslaßkammer (18, 22) wird wie beschrieben vom Rohr (50) gebildet.

Die Druckmitteleingangskammer (52, 49) wird von der äußeren Mantelfläche des Rohres (50) sowie der äußeren Mantelfläche des die Dichtkörper (13, 60) tragenden ersten rohrförmigen Körpers (15) und der Mantelfläche des die Dichtkörper (46, 40) tragenden zweiten rohrförmigen Körpers (48) begrenzt, so daß die Druckmitteleingangskammer (52, 49) nach Art einer Ringkammer ausgebildet ist.

An der Innenwand des Rohres (50) ist zwischen den einander zugewandten Seiten der beiden rohrförmigen Körper (15) und (48) ein als plattenartiges Teil ausgebildetes Umlenkelement (21) angeordnet, welches im wesentlichen quer zur Längsachse des Rohres in Richtung auf den Druckmittelauslaß (19) zu verläuft und so die Auslaßkammer (18, 22) in die beiden Teilkammern (18) und (22) unterteilt, wobei jede dieser Teilkammern (18) und (22) über den Durchlaß (62) in der Wand des Rohres (50) mit dem Druckmittelauslaß (19) im Gehäuse (25) verbunden ist.

Die Relaisventileinrichtung setzt sich somit aus zwei Relaisventilen zusammen, die zwar zwei separate, als baugleich ausgebildete Gehäusedeckel (1) und (28) dienende Gehäuseoberteile jedoch ein beiden Relaisventilen gemeinsames Gehäuse (25) aufweisen. Man könnte auch sagen, daß beide Relaisventile sich aus einem gemeinsamen Gehäuseunterteil und zwei separaten Gehäuseoberteilen zusammensetzen.

Das erste Doppelsitzventil (12, 13, 60, 8) mit dem ersten Relaiskolben (7) und das zweite Doppelsitzventil (42, 46, 39, 40) mit dem zweiten Relaiskolben (30) sind dabei in ihrer Bewegungsrichtung gegensinnig zueinander angeordnet, wobei die Auslaßöffnung des jeweils einen Auslaßventils zur Auslaßöffnung des jeweils anderen Auslaßventils hin gerichtet ist.

Anstatt die Auslaßkammer (18, 22) in zwei Teilkammern (18) und (22) zu unterteilen kann auch eine Auslaßkammer vorgesehene werden, bei welcher auf die Zwischenwand (21) verzichtet wird. In einem solchen Fall wäre es zweckmäßig, entsprechende andere Mittel vorzusehen, die eine gegenseitige Beeinflussung der beiden Relaiskolben durch das ausströmende Druckmittel verhindern, und zwar in der Weise, daß das aus dem Auslaß des jeweiligen Doppelsitzventils ausströmende Druckmittel direkt zum gemeinsamen Druckmittelauslaß (19) hin abgeleitet wird.

Würde auf eine solche Maßnahme verzichtet werden, so könnte es beim Entlüftungsvorgang an einem der beiden Relaisventile oder an beiden Relaisventilen zu einer Beeinflussung des dem jeweils anderen Ventil zugeordneten Relaiskolbens kommen (z.B. durch Bildung von Staudruck).

Die Druckmitteleingangskammer (52, 49) kann aus einer für beide Doppelsitzventile gemeinsamen, im Gehäuse (25) angeordneten Kammer oder aus zwei separaten Druckmitteleingangskammern bestehen.

Das Gehäuse (25) ist zweckmäßigerweise jeweils im Bereich der beiden Arbeitskammern (55) und (30) mit den beiden Gehäusedeckeln (1) bzw. (28) verbunden. Das Gehäuse (25) weist die beiden, den Arbeitskammern (55) und (30) zugeordneten und mit den Verbrauchern verbindbaren Druckmittelausgänge (53) und (47) auf. Die beiden als Doppelventilkörper ausgebildeten rohrförmigen Körper (15) und (48) sind zweckmäßigerweise koaxial zueinander und in Richtung ihrer Längsachse hintereinanderliegend zwischen den beiden Relaiskolben (7) und (29) im Gehäuse (25) angeordnet.

Wie schon näher beschrieben sind die beiden Auslaßventile der beiden Doppelsitzventile über einen Auslaßkanal miteinander verbunden, der seinerseits mit dem Druckmittelauslaß (19) verbunden ist. Der Auslaßkanal ist dabei rohrförmig ausgebildet (Rohr 50). Die den Doppelsitzventilen zugeordneten Enden des Auslaßkanals (Rohr 50) dienen zur abgedichteten Führung der Doppelventilkörper der Doppelsitzventile.

Die Funktion der im vorstehenden beschriebenen Relaisventileinrichtung wird nachstehend näher erläutert.

Die beiden Steuereingänge (57) und (37) der Relaisventileinrichtung sind über eine nicht dargestellte Ventileinrichtung an eine Steuerdruckmittelquelle angeschlossen und der Druckmitteleingang (51) ist mit einem Druckmittel-Vorratsbehälter verbunden.

In der Druckmitteleingangskammer (52, 49) steht Vorratsdruck an.

Wenn die Steuerkammer (6) des ersten Relaisventils und die Steuerkammer (31) des zweiten Relaisventils drucklos sind, sind das Einlaßventil (12, 13) des ersten Doppelsitzventils und das Einlaßventil (42, 46) des zweiten Doppelsitzventils geschlossen. Das Auslaßventil (8, 60) des ersten Doppelsitzventils sowie das Auslaßventil (39, 40) des zweiten Doppelsitzventils befinden sich dann in der Offenstellung. Über die Auslaßkammer (18, 22), den Durchlaß (62) des Rohres (50), den Druckmittelauslaß (19) im Gehäuse (25) und den Anschlußstutzen (20) sind die erste Arbeitskammer (55) und die zweite Arbeitskammer (30) der Relaisventileinrichtung mit der Atmosphäre verbunden.

Wird über die der Relaisventileinrichtung vorgeschaltete Ventileinrichtung Steuerdruckmittel in die erste Steuerkammer (6) und in die zweite Steuerkammer (31) eingesteuert, so bewirkt der sich in der ersten Steuerkammer (6) aufbauende Druck eine Bewegung des ersten Relaiskolbens (7) in Richtung auf die erste Arbeitskammer (55) zu. In gleicher Weise bewirkt der sich in der zweiten Steuerkammer (31) aufbauende Druck eine Bewegung des zweiten Relaiskolbens (29) in Richtung auf die zweite Arbeitskammer (30) zu.

Das Auslaßventil (8, 60) des ersten Doppelsitzventils und das Auslaßventil (39, 40) des zweiten Doppelsitzventils gelangen in die Schließstellung. Bei der weiteren Bewegung der beiden Relaiskolben (7) und (29) (gegenläufig aufeinander zu) in Richtung auf die zugehörige Arbeitskammer (55) bzw. (30) zu werden das Einlaßventil (12, 13) des ersten Doppelsitzventils und das Einlaßventil (42, 46) des zweiten Doppelsitzventils in die Offenstellung gebracht. Von der Druckmitteleingangskammer (52, 49) strömt über das geöffnete Einlaßventil (12, 13) des ersten Doppelsitzventils Druckmittel in die erste Arbeitskammer (55) und über das geöffnete Einlaßventil (42, 46) des zweiten Doppelsitzventils in die zweite Arbeitskammer (30) der Relaisventileinrichtung.

Von der ersten Arbeitskammer (55) gelangt das Druckmittel über den ersten Druckmittelausgang (53) zu einem ersten Verbraucher und über den zweiten Druckmittelausgang (47) gelangt Druckmittel aus der zweiten Arbeitskammer (30) zu einem zweiten Verbraucher.

Ist der Druck im ersten Verbraucher und somit auch in der ersten Arbeitskammer (55) soweit angestiegen, daß die Kraft des Druckes in der ersten Arbeitskammer (55) die vom Druck in der ersten Steuerkammer (6) auf den Relaiskolben (7) entgegengerichtet ausgeübte Kraft überwindet, so gelangt das Einlaßventil (12, 13) des ersten Doppelsitzventils in die Schließstellung. Eine Abschlußstellung ist erreicht.

Ist der Druck im zweiten Verbraucher und somit auch der Druck in der zweiten Arbeitskammer (30) soweit angestiegen, daß die Kraft dieses Druckes sich im Gleichgewicht befindet mit der entgegengerichtet auf den Relaiskolben (29) einwirkenden Kraft des Druckes in der zweiten Steuerkammer (31), gelangt das Einlaßventil (42, 46) des zweiten Doppelsitzventils ebenfalls in die Schließstellung. Eine Abschlußstellung des zweiten Relaisventils ist erreicht.

Wird die der Relaisventileinrichtung vorgeschaltete Ventileinrichtung umgeschaltet, so werden die erste Steuerkammer (6) und die zweite Steuerkammer (31) entlüftet. Durch die Kraft des Druckes in der ersten Arbeitskammer (55) und in der zweiten Arbeitskammer 30) werden der erste Relaiskolben (7) und der zweite Relaiskolben (29) in Richtung auf die zugehörige erste Steuerkammer (6) bzw. zweite Steuerkammer (31) verschoben.

Das Auslaßventil (60, 8) des ersten Doppelsitzventils und das Auslaßventil (39, 40) des zweiten Doppelsitzventils der Relaisventileinrichtung gelangen in die Offenstellung. Über das jetzt geöffnete erste Auslaßventil (60, 8) wird die erste Arbeitskammer (55) und somit auch der erste Verbraucher in die erste Teilkammer (18) der Auslaßkammer (18, 22) und von dieser weiter durch den Durchlaß (62) und den Druckmittelauslaß (19) zur Atmosphäre hin entlüftet. Desgleichen wird die zweite Arbeitskammer (30) und somit auch der zweite Verbraucher über das Auslaßventil (39, 40) des zweiten Doppelsitzventils in die zweite Teilkammer (22) und von dieser weiter durch den Durchlaß (62) und den Druckmittelauslaß (19) zur Atmosphäre hin entlüftet.

Als der Relaisventileinrichtung vorgeschaltete Ventileinrichtung können zwei Elektromagnetventile dienen, die entweder gleichzeitig oder unabhängig voneinander zu unterschiedlichen Zeiten steuerbar sind. Eine solche Ansteuerung der ersten Steuerkammer (6) und der zweiten Steuerkammer (31) über getrennt voneinander arbeitende Elektromagnetventile ist bei Einsatz dieser Ventileinrichtung in einer Antiblockierregeleinrichtung einer Fahrzeugbremsanlage denkbar.

Die Relaiskolben (7) und (29) der Relaisventileinrichtung können gleich große Wirkflächen aufweisen, sie können aber auch je nach Einsatzzweck der Relaisventileinrichtung unterschiedliche Wirkflächen besitzen. D.h. der erste Relaiskolben (7) kann von den Wirkflächen des zweiten Relaiskolbens (29) in seinen Abmessungen unterschiedliche Wirkflächen aufweisen.

**Patentansprüche**

1. Relaisventileinrichtung, insbesondere für eine Antiblockierregeleinrichtung für Fahrzeugbremsanlagen, mit folgenden Merkmalen:

   a) es ist ein erstes Doppelsitzventil (12, 13, 60, 8) vorgesehen, über dessen Einlaßventil (12, 13) eine erste Arbeitskammer (55) mit einer Druckmitteleingangskammer (52, 49) und über dessen Auslaßventil (60, 8) die erste Arbeitskammer (55) mit einer mit der Atmosphäre in Verbindung stehenden Auslaßkammer (18) verbindbar ist;

b) zur Betätigung des ersten Doppelsitzventils (12, 13, 60, 8) dient ein erster mit einem Steuerdruck beaufschlagbarer Relaiskolben (7);

c) es ist ein zweites Doppelsitzventil (42, 46, 39, 40) vorgesehen, über dessen Einlaßventil (42, 46) eine zweite Arbeitskammer (30) mit einer Druckmitteleingangskammer (52, 49) und über dessen Auslaßventil (39, 40) die zweite Arbeitskammer (30) mit einer mit der Atmosphäre in Verbindung stehenden Auslaßkammer (22) verbindbar ist;

d) zur Betätigung des zweiten Doppelsitzventils (42, 46, 39, 40) dient ein zweiter mit einem Steuerdruck beaufschlagbarer Relaiskolben (29);

e) die Doppelsitzventile (12, 13, 60, 8) und (42, 46, 39, 40) und die Relaiskolben (7) und (29) sind in Richtung ihrer Längsachse hintereinander angeordnet, wobei die beiden Doppelsitzventile (12, 13, 60, 8) und (42, 46, 39, 40) zwischen den Relaiskolben (7) und (29) angeordnet sind;

f) die Auslaßkammer (18) des ersten Doppelsitzventils (12, 13, 60, 8) und die Auslaßkammer (22) des zweiten Doppelsitzventils (42, 46, 39, 40) stehen über einen Druckmittelauslaß (19) mit der Atmosphäre in Verbindung;

dadurch gekennzeichnet,
daß die Auslaßkammer (18) des ersten Doppelsitzventils (12, 13, 60, 8) und die Auslaßkammer (22) des zweiten Doppelsitzventils (42, 46, 39, 40) über ein Umlenkteil (21) für das austretende Druckmittel, welches sich in Richtung auf einen für beide Auslaßkammern (18, 22) gemeinsamen Druckmittelauslaß (19) zu erstreckt, mit der Atmosphäre verbunden sind.

2. Relaisventileinrichtung nach Anspruch 1, dadurch gekennzeichnet, daß die beiden Doppelsitzventile (12, 13, 60, 8) und (42, 46, 39, 40) und die beiden Relaiskolben (7) und (29) konzentrisch zueinander angeordnet sind.

3. Relaisventileinrichtung nach wenigstens einem der vorhergehenden Ansprüche, dadurch gekennzeichnet, daß die dem ersten Doppelsitzventil (12, 13, 60, 8) zugeordnete Auslaßkammer (18) und die dem zweiten Doppelsitzventil (42, 46, 39, 40) zugeordnete Auslaßkammer (22) von einer beiden Doppelsitzventilen (12, 13, 60, 8) und (42, 46, 39, 40) gemeinsamen Kammer (18, 22) gebildet wird.

4. Relaisventileinrichtung nach wenigstens einem der vorhergehenden Ansprüche, dadurch gekennzeichnet, daß die beiden Auslaßventile (60, 8) und (39, 40) über einen Anschlußkanal (50) miteinander verbunden sind, der seinerseits mit dem Druckmittelauslaß (19) verbunden ist.

5. Relaisventileinrichtung nach Anspruch 4, dadurch gekennzeichnet, daß der Auslaßkanal als ein Rohr (50) ausgebildet ist.

6. Relaisventileinrichtung nach wenigstens einem der vorhergehenden Ansprüche, dadurch gekennzeichnet, daß die den Doppelsitzventilen (12, 13, 60, 8) und (42, 46, 39, 40) zugewandten Enden des Auslaßkanals (50) zur abgedichteten Führung der Doppelventilkörper (15, 60, 12) und (48, 46, 40) der Doppelsitzventile (12, 13, 60, 8) und (42, 46, 39, 40) dienen.

7. Relaisventileinrichtung nach wenigstens einem der vorhergehenden Ansprüche, dadurch gekennzeichnet, daß die Doppelventilkörper (15, 60, 12) und (48, 46, 40) als rohrförmige Körper ausgebildet sind.

8. Relaisventileinrichtung nach wenigstens einem der vorhergehenden Ansprüche, gekennzeichnet durch die folgenden Merkmale:

a) Die Auslaßkammer (18, 22) wird von einem Rohr (50) gebildet, welches auf seiner dem Druckmittelauslaß (19) zugewandten Seite einen Durchlaß (62) aufweist;

b) das Rohr (50) ist so ausgebildet und so im Gehäuse (25) der Relaisventileinrichtung angeordnet, daß es als Wand dient, welche die Auslaßkammer (18, 22) von der Druckmitteleingangskammer (52, 49) trennt.

9. Relaisventileinrichtung nach wenigstens einem der vorhergehenden Ansprüche, dadurch gekennzeichnet, daß die gehäusefesten Ventilsitze (13) und (42) von ringförmigen Einsätzen (11) und (43) gebildet sind, die am Gehäuse (25) befestigt sind.

10. Relaisventileinrichtung nach wenigstens einem der vorhergehenden Ansprüche, gekennzeichnet durch die folgenden Merkmale:

a) Der Auslaßkanal (50) verläuft im wesentlichen geradlinig;

b) in dem Auslaßkanal (50) ist ein im wesentlichen quer zu seiner Längsachse verlaufendes Umlenkteil (21) angeordnet;

c) das Umlenkteil (21) ist im Bereich der Verbindungsstelle zwischen Auslaßkanal (50) und Druckmittelauslaß (19) angeordnet.

11. Relaisventileinrichtung nach Anspruch 10, dadurch gekennzeichnet, daß das Umlenkelement als ein in dem Rohr (50) angeordnetes im wesentlichen quer zur Längsachse des Rohres (50) verlaufendes plattenartiges Teil ausgebildet ist.

12. Relaisventileinrichtung nach wenigstens einem der vorhergehenden Ansprüche, dadurch gekennzeichnet, daß die Relaisventileinrichtung in einem den Druckmitteleingang (51) und den Druckmitteilauslaß (19) aufweisenden zweiseitig offenen Gehäuse (25) angeordnet ist, dessen Enden von je einem Gehäusedeckel (1) bzw. (28) abgeschlossen ist.

13. Relaisventileinrichtung nach Anspruch 12, dadurch gekennzeichnet, daß die Gehäusedeckel (1) und (28) baugleich ausgebildet sind.

14. Relaisventileinrichtung nach wenigstens einem der vorhergehenden Ansprüche, dadurch gekennzeichnet, daß in jedem Gehäusedeckel (1) bzw. (28) ein Relaiskolben (7) bzw. (29) abgedichtet geführt und die zugeordnete Steuerkammer (6) bzw. (31) mit dem zugeordneten Steueranschluß (57) bzw. (37) angeordnet sind.

15. Relaisventileinrichtung nach wenigstens einem der vorhergehenden Ansprüche, dadurch gekennzeichnet, daß das Gehäuse (25) die beiden Doppelventilkörper (15, 13, 60) und (48, 46, 40) enthält.

16. Relaisventileinrichtung nach wenigstens einem der vorhergehenden Ansprüche, dadurch gekennzeichnet, daß das Gehäuse (25) jeweils im Bereich der beiden Arbeitskammern (55) bzw. (30) mit den beiden Gehäusedeckeln (1) bzw. (28) verbunden ist.

17. Relaisventileinrichtung nach wenigstens einem der vorhergehenden Ansprüche, dadurch gekennzeichnet, daß das Gehäuse (25) die beiden den Arbeitskammern (55) bzw. (30) zugeordneten und mit Verbraucherkreisen verbindbaren Druckmittelausgänge (53) bzw. (47) aufweist.

18. Relaisventileinrichtung nach wenigstens einem der vorhergehenden Ansprüche, dadurch gekennzeichnet, daß die dem ersten Doppelsitzventil (12, 13, 60, 8) zugeordnete Druckmitteleingangskammer (52) und die dem zweiten Doppelsitzventil (42, 46, 39, 40) zugeordnete zweite Druckmitteleingangskammer (49) von einer gemeinsamen Druckmitteleingangskammer (52, 49) gebildet wird.

## Claims

1. Relay valve arrangement, in particular for an anti-lock control arrangement for vehicle brake systems, having the following features:

    a) a first double-seat valve (12, 13, 60, 8) is provided, by way of the inlet valve (12, 13) of which a first work chamber (55) can be connected to a pressure medium inlet chamber (52, 49) and by way of the outlet valve (60, 8) of which the first work chamber (55) can be connected to an outlet chamber (18) connected to the atmosphere;

    b) a first relay piston (7) that can be pressurized with a control pressure serves to actuate the first double-seat valve (12, 13, 60, 8);

    c) a second double-seat valve (42, 46, 39, 40) is provided, by way of the inlet valve (42, 46) of which a second work chamber (30) can be connected to a pressure medium inlet chamber (52, 49) and by way of the outlet valve (39, 40) of which the second work chamber (30) can be connected to an outlet chamber (22) connected to the atmosphere;

    d) a second relay piston (29) that can be pressurized with a control pressure serves to actuate the second double-seat valve (12, 13, 60, 8);

    e) the double-seat valves (12, 13, 60, 8) and (42, 46, 39, 40) and the relay pistons (7) and (29) are arranged one behind the other in the direction of their longitudinal axis, the two double-seat valves (12, 13, 60, 8) and (42, 46, 39, 40) being arranged between the relay pistons (7) and 29;

    f) the outlet chamber (18) of the first double-seat valve (12, 13, 60, 8) and the outlet chamber (22) of the second double-seat valve (42, 46, 39, 40) are connected by way of a pressure medium outlet (19) to the atmosphere;

    characterized in that

    the outlet chamber (18) of the first double-seat valve (12, 13, 60, 8) and the outlet chamber (22) of the second double-seat valve (42, 46, 39, 40) are connected to the atmosphere by way of a diverter member (21) for the emerging pressure medium, which extends towards a pressure medium outlet (19) common to both outlet chambers (18, 22).

2. A relay valve arrangement according to claim 1, characterized in that the two double-seat valves (12, 13, 60, 8) and (42, 46, 39, 40) and the two relay pistons (7) and (29) are arranged concentrically with respect to one another.

3. A relay valve arrangement according to at least one of the preceding claims, characterized in that the outlet chamber (18) associated with the first double-seat valve (12, 13, 60, 8) and the outlet chamber (22) associated with the second double-seat valve (42, 46, 39, 40) is formed by a chamber (18, 22) common to both double-seat valves (12, 13, 60, 8) and (42, 46, 39, 40).

4. A relay valve arrangement according to at least one of the preceding claims, characterized in that the two outlet valves (60, 8) and (39, 40) are connected with one another by way of a connecting channel (50) which in its turn is connected to the pressure medium outlet (19).

5. A relay valve arrangement according to claim 4, characterized in that the outlet channel is in the form of a tube (50).

6. A relay valve arrangement according to at least one of the preceding claims, characterized in that the ends of the outlet channel (50) facing the double-seat valves (12, 13, 60, 8) and (42, 46, 39, 40) serve for the sealed guidance of the double valve members (15, 60, 12) and (48, 46, 40) of the double-seat valves (12, 13, 60, 8) and (42, 46, 39, 40).

7. A relay valve arrangement according to at least one of the preceding claims, characterized in that the double valve members (15, 60, 12) and (48, 46, 40) are in the form of tubular members.

8. A relay valve arrangement according to at least one of the preceding claims, characterized by the following features:
   a) the outlet chamber (18, 22) is formed by a tube (50) which on its side facing the pressure medium outlet (19) has a passage (62);
   b) the tube (50) is formed in such a manner and is arranged in the housing (25) of the relay valve arrangement so that it serves as a wall which separates the outlet chamber (18, 22) from the pressure medium inlet chamber (52, 49).

9. A relay valve arrangement according to at least one of the preceding claims, characterized in that the valve seats (13) and (42) fixed in the housing are formed by annular inserts (11) and (43) which are fixed to the housing (25).

10. A relay valve arrangement according to at least one of the preceding claims, characterized by the following features:
   a) the outlet channel (50) extends in a substantially straight line;
   b) in the outlet channel (50) there is arranged a diverter member (21) running substantially at right angles to the longitudinal axis thereof;
   c) the diverter member (21) is arranged in the region of the junction point between the outlet channel (50) and the pressure medium outlet (19).

11. A relay valve arrangement according to claim 10, characterized in that the diverter member is in the form of a plate-like member arranged in the tube (50) and extending substantially transversely to the longitudinal axis of the tube (50).

12. A relay valve arrangement according to at least one of the preceding claims, characterized in that the relay valve arrangement is arranged in a housing (25) open on two sides and having the pressure medium inlet (51) and the pressure medium outlet (19), the ends of which housing are closed by respective housing covers (1) and (28).

13. A relay valve arrangement according to claim (12), characterized in that the housing covers (1) and (28) are of identical construction.

14. A relay valve arrangement according to at least one of the preceding claims, characterized in that a respective relay piston (7, 29) is guided in a sealed manner and the associated respective control chamber (6, 31) with the associated respective control connection (57, 37) is arranged in each housing cover (1) and (28).

15. A relay valve arrangement according to at least one of the preceding claims, characterized in that the housing (25) contains the two double valve members (15, 13, 60) and (48, 46, 40).

16. A relay valve arrangement according to at least one of the preceding claims, characterized in that the housing (25) is connected in the region of the two work chambers (55) and (30) respectively to the two housing covers (1) and (28) respectively.

17. A relay valve arrangement according to at least one of the preceding claims, characterized in that the housing (25) has the two pressure medium outlets (53) and (47) respectively associated with the work chambers (55) and (30) and arranged to be connected to consumer circuits.

18. A relay valve arrangement according to at least one of the preceding claims, characterized in that the pressure medium inlet chamber (52) associated with the first double-seat valve (12, 13, 60, 8) and the second pressure medium inlet chamber (49) associated with the second double-seat valve (42, 46, 39, 40) are formed by a common pressure medium inlet chamber (52, 49).

**Revendications**

1. Dispositif à vannes de relais, en particulier pour un dispositif de régulation antiblocage de l'installation de freinage d'un véhicule à moteur, où

   a) il est prévu une première vanne à double siège (12, 13, 60, 8) par la vanne d'admission (12, 13) de laquelle une première chambre de travail (55) peut être reliée à une chambre d'entrée de fluide sous pression (52, 49) et par la vanne d'échappement (60, 8) de laquelle la première chambre de travail (55) peut être reliée à une chambre d'échappement (18) qui communique avec l'atmosphère ;

   b) un premier piston de pilotage (7) pouvant être exposé à une pression de commande actionne la première vanne à double siège (12, 13, 60, 8) ;

   c) il est prévu une seconde vanne à double siège (42, 46, 39, 40) par la vanne d'admission (42, 46) de laquelle une seconde chambre de travail (30) peut être reliée à une chambre d'entrée de fluide sous pression (52, 49) et par la vanne d'échappement (39, 40) de laquelle la seconde chambre de travail (30) peut être reliée à une chambre d'échappement (22) qui communique avec l'atmosphère ;

   d) un second piston de pilotage (29) pouvant être exposé à une pression de commande actionne la seconde vanne à double siège (42, 46, 39, 40) ;

   e) les vannes à double siège (12, 13, 60, 8) et (42, 46, 39, 40) ainsi que les pistons de pilotage (7) et (29) sont disposés les uns derrière les autres dans la direction de leur axe longitudinal, les deux vannes à double siège (12, 13, 60, 8) et (42, 46, 39, 40) étant placées entre les pistons de pilotage (7) et (29) ;

   f) la chambre d'échappement (18) de la première vanne à double siège (12, 13, 60, 8) et la chambre d'échappement (22) de la seconde vanne à double siège (42, 46, 39, 40) communiquent avec l'atmosphère par une ouverture d'échappement du fluide sous pression (19) ;

   caractérisé en ce que la chambre d'échappement (18) de la première vanne à double siège (12, 13, 60, 8) et la chambre d'échappement (22) de la seconde vanne à double siège (42, 46, 39, 40) communiquent avec l'atmosphère par une pièce de déflexion (21) du fluide sous pression s'échappant, qui s'étend dans la direction de l'ouverture d'échappement de fluide sous pression (19) commune aux deux chambres d'échappement (18, 22).

2. Dispositif à vannes de relais selon la revendication 1, caractérisé en ce que les deux vannes à double siège (12, 13, 60, 8) et (42, 46, 39, 40) ainsi que les deux pistons de pilotage (7) et (29) sont disposés concentriquement les uns vis-à-vis des autres.

3. Dispositif à vannes de relais selon au moins une des revendications précédentes, caractérisé en ce que la chambre d'échappement (18) correspondant à la première vanne à double siège (12, 13, 60, 8) et la chambre d'échappement (22) correspondant à la seconde vanne à double siège (42, 46, 39, 40) sont formées par une chambre commune (18, 22) aux deux vannes à double siège (12, 13, 60, 8) et (42, 46, 39, 40).

4. Dispositif à vannes de relais selon au moins une des revendications précédentes, caractérisé en ce que les deux vannes d'échappement (60, 8) et (39, 40) sont reliées ensemble par un canal d'échappement (50) qui est à son tour relié à l'ouverture d'échappement de fluide sous pression (19).

5. Dispositif à vannes de relais selon la revendication 4, caractérisé en ce que le canal d'échappement prend la forme d'un tube (50).

6. Dispositif à vannes de relais selon au moins une des revendications précédentes, caractérisé en ce que les extrémités du canal d'échappement (50) tournées vers les vannes à double siège (12, 13, 60, 8) et (42, 46, 39, 40) servent à guider de manière étanche les doubles corps de vanne (15, 60, 12) et (48, 46, 40) des deux vannes à double siège (12, 13, 60, 8) et (42, 46, 39, 40).

7. Dispositif à vannes de relais selon au moins une des revendications précédentes, caractérisé en ce que les doubles corps de vanne (15, 60, 12) et (48, 46, 40) prennent la forme de pièces tubulaires.

8. Dispositif à vannes de relais selon au moins une des revendications précédentes, caractérisé en ce que

a) la chambre d'échappement (18, 22) est formée par un tube (50) qui présente sur sa face tournée vers l'ouverture d'échappement du fluide sous pression (19) une traversée (62) ;

b) le tube (50) est conformé et disposé dans le boîtier (25) du dispositif à vannes de relais de manière à servir de paroi séparant la chambre d'échappement (18, 22) de la chambre d'entrée du fluide sous pression (52, 49).

9. Dispositif à vannes de relais selon au moins une des revendications précédentes, caractérisé en ce que les sièges de vanne (13) et (42) solidaires du boîtier (25) sont formés par des inserts annulaires (11) et (43) qui sont fixés sur le boîtier.

10. Dispositif à vannes de relais selon au moins une des revendications précédentes, caractérisé en ce que

a) le canal d'échappement (50) est de forme essentiellement rectiligne ;

b) le canal d'échappement (50) comporte une pièce de déflexion (21) disposée essentiellement de manière perpendiculaire à son axe longitudinal ;

c) la pièce de déflexion (21) est disposée au niveau du point de raccordement entre le canal d'échappement (50) et l'ouverture d'échappement de fluide sous pression (19).

11. Dispositif à vannes de relais selon la revendication 10, caractérisé en ce que la pièce de déflexion a la forme d'une plaquette disposée dans le tube (50) et orientée essentiellement de manière perpendiculaire à l'axe longitudinal du tube (50).

12. Dispositif à vannes de relais selon au moins une des revendications précédentes, caractérisé en ce que le dispositif à vannes de relais est disposé dans un boîtier (25) ouvert de deux côtés et possédant l'entrée de fluide sous pression (51) et l'ouverture d'échappement de fluide sous pression (19), dont les deux extrémités sont fermées chacune par un chapeau de boîtier (1) et (28).

13. Dispositif à vannes de relais selon la revendication 12, caractérisé en ce que les chapeaux de boîtier (1) et (28) sont de construction identique.

14. Dispositif à vannes de relais selon au moins une des revendications précédentes, caractérisé en ce que chacun des chapeaux de boîtier (1) et (28) guide de manière étanche un piston de pilotage (7) et (29) et abrite la chambre de commande correspondante (6) et (31) avec le raccordement de commande (57) et (37) correspondant.

15. Dispositif à vannes de relais selon au moins une des revendications précédentes, caractérisé en ce que le boîtier (25) renferme les deux doubles corps de vanne (15, 13, 60) et (48, 46, 40).

16. Dispositif à vannes de relais selon au moins une des revendications précédentes, caractérisé en ce que le boîtier (25) est relié avec les deux chapeaux de boîtier (1) et (28) au niveau des deux chambres de travail (55) et (30).

17. Dispositif à vannes de relais selon au moins une des revendications précédentes, caractérisé en ce que le boîtier (25) comporte les deux sorties de fluide sous pression (53) et (47) pouvant être reliées aux circuits des consommateurs et qui correspondent aux chambres de travail (55) et (30).

18. Dispositif à vannes de relais selon au moins une des revendications précédentes, caractérisé en ce que la chambre d'entrée de fluide sous pression (52) correspondant à la première vanne à double siège (12, 13, 60, 8) et la seconde chambre d'entrée de fluide sous pression (49) correspondant à la seconde vanne à double siège (42, 46, 39, 40) sont formées par une chambre d'entrée de fluide sous pression (52, 49) commune.